# EUROPÄISCHE PATENTSCHRIFT

(11) **EP 4 248 118 B1**
(45) Veröffentlichungstag und Bekanntmachung des Hinweises auf die Patenterteilung: **18.06.2025**
(21) Anmeldenummer: 20811297.9
(22) Anmeldetag: 20.11.2020
(51) Int. Cl.: F16L 11/133, F17D 5/04, G01M 3/28, F16L 33/01, F16L 39/02

(54) **SCHWIMMSCHLAUCHSEGMENT SOWIE SYSTEM AUS SCHWIMMSCHLAUCHSEGMENTEN**
FLOATING HOSE SEGMENT AND SYSTEM OF FLOATING HOSE SEGMENTS
SEGMENT DE TUYAU FLOTTANT ET SYSTÈME DE SEGMENTS DE TUYAU FLOTTANT

(43) Veröffentlichungstag der Anmeldung: 27.09.2023
(73) Patentinhaber: ContiTech Deutschland GmbH, 30175 Hannover (DE)
(72) Erfinder: BISHOP, Simon, 30165 Hannover (DE); STATON, Paul, 30165 Hannover (DE); SIVAKUMAR, Divarshan, 30165 Hannover (DE)
(74) Vertreter: Preusser, Andrea
(86) Internationale Anmeldenummer: PCT/EP2020/082885
(87) Internationale Veröffentlichungsnummer: WO 2022/106023

(56) Entgegenhaltungen:
- EP-A2- 1 795 879
- BR-A- 9 603 434

## Beschreibung

Die vorliegende Erfindung betrifft ein Schwimmschlauchsegment sowie ein System aus derartigen Schwimmschlauchsegmenten.

Schwimmschläuche sind derart ausgebildet, dass sie auf der Wasseroberfläche schwimmen können, wobei sie dazu eingesetzt werden, eine Boje mit einem Tankschiff zu verbinden, so dass beispielsweise Öl von der Boje zu dem Schiff oder umgekehrt von dem Schiff zu der Boje gepumpt werden kann, wobei die Boje wiederum mit einer weiteren Leitung verbunden ist, die die Boje mit einem Reservoir für das Öl verbindet. Derartige Schwimmschläuche werden insbesondere auf hoher See eingesetzt, sodass die Tankschiffe bereits dort be- oder entladen werden können, und es nicht erforderlich ist, dass die Schiffe einen Hafen anlaufen.

Bei derartigen Schwimmschlauchsystemen ergibt sich jedoch das folgende technische Problem. Wenn ein Segment eines Schwimmschlauchsystems ein Leck aufweist, kann es dazu kommen, dass entweder Öl aus dem Inneren des Schwimmschlauches in die Umgebung gelangt, was mit erheblichen Folgen für die Umwelt verbunden ist und wiederum dringend vermieden werden soll. Wenn auf der anderen Seite Wasser ins Innere des Schwimmschlauches eindringt, kann dies dazu führen, dass der Schwimmschlauch absinkt, sodass dieser anschließend mit erheblichem Aufwand geborgen werden muss.

In der Zwischenzeit sind Schwimmschlauchsegmente häufig derart ausgebildet, dass sie einerseits ein inneres Schlauchelement aufweisen, das schlauchförmig ausgebildet ist und einen Leitungsbereich begrenzt, durch den ein Fluid wie beispielsweise das Öl, gefördert werden kann. Das innere Schlauchelement ist umgeben von einem äußeren Schlauchelement, das ebenfalls schlauchförmig ausgebildet ist und eine zweite innere Oberfläche aufweist, die zu dem inneren Schlauchelement weist. Zwischen der ersten äußeren Oberfläche des inneren Schlauchelements und der zweiten inneren Oberfläche des äußeren Schlauchelements ist ein Bereich gebildet, in dem sich Flüssigkeit ansammeln kann. Dabei sind die Schlauchelemente nicht notwendigerweise so bemessen, dass dauerhaft ein freies Volumen zwischen den Schlauchelementen gebildet ist. Vielmehr ist es auch denkbar, dass die Schlauchelemente im Normalfall aneinander anliegen, aber nicht fest miteinander verbunden sind, sodass aufgrund der elastischen Eigenschaften der Schlauchelemente sich erst dann ein freies Volumen bildet, wenn entweder Öl von innen oder Salzwasser von außen aufgrund eines Lecks entweder in dem inneren Schlauchelement oder dem äußeren Schlauchelement in diesen Bereich eindringt.

Wenn entweder in dem äußeren Schlauchelement oder dem inneren Schlauchelement tatsächlich ein Leck vorhanden ist, dringt die jeweilige Flüssigkeit zunächst in den Bereich, der zwischen den Schlauchelementen gebildet ist, ein und sammelt sich dort an. Wenn die Menge an Flüssigkeit dort zu groß wird, reißt jeweils auch das weitere Schlauchelement, sodass es dann zu dem vollständigen Leck kommt und dann der Leitungsbereich mit der Umgebung verbunden ist, sodass beispielsweise Öl aus dem Leitungsbereich in die Umgebung gelangt.

Die BR 9603434 A beschreibt ein System zur Erkennung von Lecks im Innengehäuse, das in einem flexiblen Doppelschlauchgehäuse installiert ist, wobei es Sensoren aufweist, die in dem Raum zwischen dem Innen- und dem Außengehäuse angebracht sind, die miteinander verbunden sind und über Kabel an eine elektronische Einheit angeschlossen sind, die in einem dichten Gehäuse angebracht ist, das an dem Flansch des Schlauchs mit Hilfe einer Halterung befestigt ist; wobei die Kabel von der Innenseite des Schlauchs durch eine dichte Leitung zu der elektronischen Einheit führen; wobei der genannte Sensor aus einem Teil aus mechanisch abbaubarem Polymer besteht, wenn es mit Kohlenwasserstoffen in Berührung kommt, und in einem Schutzgehäuse montiert ist, das mit Löchern für den Öleinlass versehen ist; wobei das genannte Polymerteil, wenn es bricht, das Schließen der elektrischen Kontakte mit Hilfe von Metallteilen unter der Wirkung von Federn ermöglicht, wodurch ein elektrisches Signal an die elektronische Einheit gesendet wird, wobei optische und akustische Fahnen entfernt installiert sind.

Die EP 1 795 879 A2 beschreibt einen Flüssigkeitsleckdetektor für ein Schlauchleitungssegment mit doppelter Karkasse und umfasst ein Sensorgehäuse, das durch Seitenwände definiert ist, die außen an dem Schlauchleitungssegment angebracht sind, und eine innere Gehäusekammer aufweist, die mit dem Sammelraum in Verbindung steht. Ein optischer Sensor ist durch mindestens eine Seitenwand des Sensorgehäuses hindurch angebracht und positioniert ein optisches Sensorelement in der Kammer des Sensorgehäuses, um das Vorhandensein von Flüssigkeit im Sammelraum des Schlauchs zu erfassen. Der optische Sensor umfasst ferner ein Analyseelementmittel, das mit dem optischen Sensorelementmittel verbunden und außerhalb der einen Wand des Sensorgehäuses positioniert ist, wobei das Analysemittel Daten erzeugt, die den Fluidstatus innerhalb des Schlauchsammelraums anzeigen; und ein Sendeelementmittel, das mit dem Analysemittel verbunden ist, um Daten von dem Analyseelementmittel zu empfangen und die Daten an mindestens einen entfernten Empfänger zu senden. Das optische Sensorelementmittel ist von dem Analysemittel elektrisch isoliert und umfasst mindestens eine optische Faser, die so positioniert ist, dass sie mit dem in einen Sammelraum zwischen den beiden Karkassen des Schlauchs austretenden Fluid in Kontakt kommt.

Davon ausgehend, ist es nun die Aufgabe der vorliegenden Erfindung, ein Schwimmschlauchsegment bereit zu stellen, das frühzeitig, bevor es zu einer Verbindung des Leitungsbereichs mit der Umgebung kommt, Leckagen in dem Schwimmschlauchsegment erkennt.

Gemäß einem ersten Aspekt der vorliegenden Erfindung wird diese Aufgabe durch ein Schwimmschlauchsegment gelöst mit
- einem inneren Schlauchelement, das schlauchförmig ist und eine erste innere Oberfläche, die einen Leitungsbereich begrenzt, durch den ein Fluid wie beispielsweise Öl gefördert werden kann, und eine erste äußere Oberfläche aufweist, die weg von dem Leitungsbereich weist,
- einem äußeren Schlauchelement, das schlauchförmig ist sowie eine zweite innere Oberfläche, die einen Innenraum begrenzt, durch den sich das innere Schlauchelement erstreckt, und eine zweite äußere Oberfläche aufweist, die nach außen weg von dem inneren Schlauchelement weist, und
- wenigstens einer Kommunikationseinrichtung, die angepasst ist, direkt oder indirekt Information zu einer zentralen Kontrolleinrichtung zu übertragen,
- wobei das innere und das äußere Schlauchelement sich zwischen einem ersten Ende und einem zweiten Ende des Schwimmschlauchsegments erstrecken,
- wobei wenigstens eine Sensoreinrichtung vorgesehen ist, wobei die wenigstens eine Sensoreinrichtung so angeordnet und angepasst ist, dass sie in der Lage ist, das Vorhandensein von wenigstens einer Substanz in dem Bereich zwischen der ersten äußeren Oberfläche und der zweiten inneren Oberfläche zu detektieren,
- wobei die wenigstens eine Sensoreinrichtung mit der Kommunikationseinrichtung verbunden ist, sodass Information, die das Vorhandensein der wenigstens einen Substanz zwischen der ersten äußeren Oberfläche und der zweiten inneren Oberfläche betrifft, zu der Kommunikationseinrichtung übertragen werden kann, und
- wobei die Kommunikationseinrichtung angepasst ist, die Information betreffend das Vorhandensein der wenigstens einen Substanz zwischen der ersten äußeren Oberfläche und der zweiten inneren Oberfläche zu der zentralen Kontrolleinrichtung zu übertragen.

Das erfindungsgemäße Schwimmschlauchsegment weist ein inneres Schlauchelement auf, dass eine innere Oberfläche hat, die den eigentlichen Leitungsbereich begrenzt, durch den ein Fluid wie beispielsweise Öl gefördert wird. Das innere Schlauchelement ist von einem äußeren Schlauchelement umgeben, wobei die erste äußere Oberfläche, die an dem inneren Schlauchelement vorgesehen ist, und die zweite innere Oberfläche, die an dem äußeren Schlauchelement ausgebildet ist, zueinander weisen und einen Bereich begrenzen, in den dann Flüssigkeit gelangen kann, wenn entweder das äußere Schlauchelement oder das innere Schlauchelement eine Leckage haben. Eine Leckage in dem äußeren Schlauchelement führt zunächst dazu, dass Wasser, insbesondere Salzwasser, in den Bereich gelangt. Wenn umgekehrt das innere Schlauchelement eine Leckage aufweist, gelangt Öl in den Bereich zwischen den Schlauchelementen.

Erfindungsgemäß ist wenigstens eine Sensoreinrichtung vorgesehen, die ausgebildet ist, dass Vorhandensein einer Substanz in Bereich zwischen der ersten äußeren Oberfläche und zweiten inneren Oberflächen zu detektieren. Insbesondere kann in einer vorteilhaften Ausgestaltung der vorliegenden Erfindung die Sensoreinrichtung so ausgebildet sein, um Kohlenwasserstoffe und/oder Salzwasser zu detektieren.

Ferner ist an dem erfindungsgemäßen Schwimmschlauchsegment eine Kommunikationseinrichtung vorgesehen, die zum einen mit der wenigstens einen Sensoreinrichtung verbunden ist und zum anderen direkt oder indirekt Informationen zu einer zentralen Kontrolleinrichtung übertragen kann. Die Verbindung zwischen der Kommunikationseinrichtung und der Sensoreinrichtung kann kabelgebunden oder drahtlos ausgebildet sein. Da die Sendereinrichtung jedoch mit Energie versorgt werden muss, kann es vorteilhaft sein, eine kabelgebundene Verbindung vorzusehen.

Wenn bei dem erfindungsgemäßen Aufbau des Schwimmschlauchsegments entweder eine Leckage in dem äußeren Schlauchelement oder in dem inneren Schlauchelement auftritt, gelangt entweder aus der Leitung austretendes Öl in den Bereich zwischen der ersten äußeren Oberfläche und der zweiten inneren Oberfläche und kann von der Sensoreinrichtung detektiert werden, oder es gelangt Salzwasser von außen in den Bereich zwischen den Oberflächen und kann ebenfalls von der Sensoreinrichtung erfasst werden.

In beiden Fällen kann die Sensoreinrichtung dann ein entsprechendes Signal an die Kommunikationseinrichtung übertragen, dass die jeweilige Flüssigkeit in dem Bereich vorhanden ist. Die Kommunikationseinrichtung wiederum kann dieses Signal weiter verarbeiten und an eine zentrale Kontrolleinrichtung übermitteln, sodass diese einen Alarm auslösen kann.

Vorteilhaft bei der erfindungsgemäßen Ausgestaltung ist, dass der Alarm bereits dann ausgelöst wird, wenn eine Leckage nur in einem in der beiden Schlauchelemente aufgetreten ist, was im Falle einer Leckage des inneren Schlauchelements noch nicht dazu führt, dass Öl in die Umgebung gelangt. Genauso wenig führt eine Leckage nur in dem äußeren Schlauchelement bereits dazu, dass der das Schwimmschlauchsegment absinkt. Daher wird das Alarmsignal bereits in einem frühen Stadium erzeugt, bevor der eigentliche Schaden eintritt. Es wird beim erfindungsgemäßen Schwimmschlauchsegment also bereits frühzeitig ein Alarm ausgelöst, und es bleibt genügend Zeit, Maßnahmen zu treffen, die einen größeren Schaden verhindern.

In einer bevorzugten Ausgestaltung der vorliegenden Erfindung weist das Schwimmschlauchsegment ferner ein erstes Anschlusselement an dem ersten Ende und ein zweites Anschlusselement an dem zweiten Ende auf, wobei hier jedes Anschlusselement einen Kupplungsabschnitt zur Verbindung mit einem weiteren Anschlusselement und einen Rohrabschnitt ausweist, der sich weg von dem Kupplungsabschnitt erstreckt. An jedem Anschlusselement ist das innere Schlauchelement an einem ersten Abschnitt der Rohrabschnitt befestigt und das äußere Schlauchelement ist an einem zweiten Abschnitt des Rohrabschnitts befestigt, wobei der zweite Abschnitt näher an dem Kupplungsabschnitt ist als der erste Abschnitt.

Bei dieser Ausgestaltung der vorliegenden Erfindung sind an den Enden des Schwimmschlauchsegments Anschlusselemente vorgesehen, die insbesondere an ihren freien Enden Flansche ausweisen, sodass zwei Anschlusselemente fest miteinander verbunden werden können und damit mehrere Schlauchsegmente miteinander gekoppelt werden können. Weiterhin weisen die Anschlusselemente Rohrabschnitte aus, auf die die Enden der Schlauchelemente aufgeschoben werden können, wobei das innere Schlauchelement auf einem Abschnitt des Rohrabschnitts aufgeschoben und mit diesem verbunden ist, der weiter weg von dem Kupplungsabschnitt ist als der Abschnitt des Rohrabschnitts, auf dem das zweite äußere Schlauchelement ausgeschoben und mit dem Rohrabschnitt verbunden ist. Somit sind beide, das Schwimmschlauchsegment bildende Schlauchelemente fest mit dem Anschlusselement verbunden. Darüber hinaus ermöglicht dies, an dem Rohrabschnitt die Sensoreinrichtung zu befestigen, und zwar in dem Bereich zwischen den Abschnitten, an denen die Schlauchelemente befestigt sind. Dann grenzt die Sensoreinrichtung an den Bereich an, der zwischen der ersten äußeren Oberfläche und der zweiten inneren Oberfläche gebildet ist und in den Flüssigkeit entweder von außen oder von innen eindringen kann. Dieser Aufbau ermöglicht also, die Sensoreinrichtung direkt an dem Anschlusselement zu befestigen.

In einer weiteren vorteilhaften Ausgestaltung der Erfindung können bei der Verwendung eines Anschlusselements mit zwei Abschnitten an dem Rohrabschnitt, an denen die Schlauchelemente befestigt sind, zwischen diesen Abschnitten um den Umfang des Rohrabschnitts herum mehrere Sensoreinrichtungen befestigt sein, was die Empfindlichkeit des Systems für Leckagen weiter erhöht.

Gemäß einer weiteren bevorzugten Ausführungsform kann eine umlaufende Rippe an dem Rohrabschnitt der Anschlusselemente vorgesehen sein, die sich zwischen dem ersten Abschnitt und zweiten Abschnitt befindet, also zwischen den Bereichen, in denen das innere Schlauchelement und das äußere Schlauchelement mit dem Rohrabschnitt verbunden sind. Dies ermöglicht eine besonders zuverlässige Verbindung zwischen dem Anschlusselement einerseits und den Schlauchelementen andererseits. Darüber hinaus kann an der umlaufenden Rippe die Sensoreinrichtung befestigt werden, was die Montage weiter vereinfacht.

In einer weiteren bevorzugten Ausgestaltung kann bei einem Schwimmschlauchsegment, das Anschlusselemente an dessen Enden aufweist, die wenigstens eine Sensoreinrichtung mit der Kommunikationseinrichtung über ein Kabel verbunden sein, das zwischen den äußeren Schlauchelement und dem zweiten Abschnitt des Rohrabschnitts verläuft und/oder das durch das zweite Schlauchelement hindurchverläuft. Bei der Variante, bei der das Kabel zwischen dem äußeren Schlauchelement und dem zweiten Abschnitt des Rohrabschnitts verläuft, ist die Montage des Kabels vereinfacht, während bei der zweiten Variante, bei der das Kabel durch das zweite Schlauchelement hindurch läuft, Undichtigkeiten in dem Bereich des Kabels an dem zweiten Rohrabschnitt vermieden werden.

Erfindungsgemäß ist die Kommunikationseinrichtung in einer Vertiefung in dem äußeren Schlauchelement aufgenommen, wobei sich die Vertiefung von der zweiten äußeren Oberfläche, also von der Außenseite des Schwimmschlauchsegments, in das äußere Schlauchelement hineinerstreckt. In einem solchen Fall kann sich das Kabel hin zu der Sensoreinrichtung durch die das zweite Schlauchelement hindurch zu der Vertiefung erstrecken. Eine solche Anordnung ermöglicht es, die Kommunikationseinrichtung einfach zu montieren, wobei sie dennoch geschützt angebracht ist.

Weiterhin ist es bevorzugt, wenn die Kommunikationseinrichtung ausgestaltet ist, eine Information, die das Vorhandensein der fraglichen Substanz in Bereich zwischen der ersten äußeren Oberflächen und der zweiten inneren Oberfläche betrifft, drahtlos zu einer weiteren Kommunikationseinrichtung oder zu der zentralen Kontrolleinrichtung übertragen kann. Dies ermöglicht, Informationen über eine mögliche Leckage entweder zunächst zu der Kommunikationseinrichtung des nächstgelegenen Schwimmschlauchsegments und von dort weiter zu der zentralen Kontrolleinrichtung zu übertragen oder sie direkt zu dieser Einheit zu übertragen.

Weiterhin ist es bevorzugt, wenn das innere Schlauchelement eine innere Karkasse und/oder das äußere Schlauchelement eine äußere Karkasse aufweisen. Durch die Karkassen wird die Stabilität der Schlauchelemente weiter erhöht, was die Gesamtstabilität des Schwimmschlauchsegments verbessert.

Gemäß einem weiteren Aspekt der vorliegenden Erfindung wird die obige Ausgabe durch ein Schwimmschlauchsystem umfassend eine Vielzahl von Schwimmschlauchsegmenten gemäß den vorherigen Ausführungen gelöst, wobei die ersten und zweiten Enden unterschiedlicher Schwimmschlauchsegmente derart miteinander verbunden sind, dass sie eine Kette von Schwimmschlauchsegmenten bilden, die sich zwischen einem ersten Kettenende und einem zweiten Kettenende erstreckt.

Dabei ist es weiter bevorzugt, wenn das System ferner eine Boje aufweist, die an einem der Kettenenden angeordnet ist und die zentrale Kontrolleinheit aufweist.

Im Folgenden wird die vorliegende Erfindung anhand einer Zeichnung erläutert, die lediglich bevorzugte Ausführungsbeispiele der vorliegenden Erfindung zeigt, wobei
- Fig. 1: eine schematische Darstellung eines bevorzugten Ausführungsbeispiels eines erfindungsgemäßen Schwimmschlauchsystems ist,
- Fig. 2: einen Teil des ersten Endes eines Ausführungsbeispiels eines erfindungsgemäßen Schwimmschlauchsegments im Querschnitt zeigt und
- Fig. 3: eine perspektivische Darstellung des Anschlusselements des ersten Endes eines Ausführungsbeispiels eines erfindungsgemäßen Schwimmschlauchsegments mit den Sensoreinrichtungen in einer perspektivischen Darstellung zeigt.

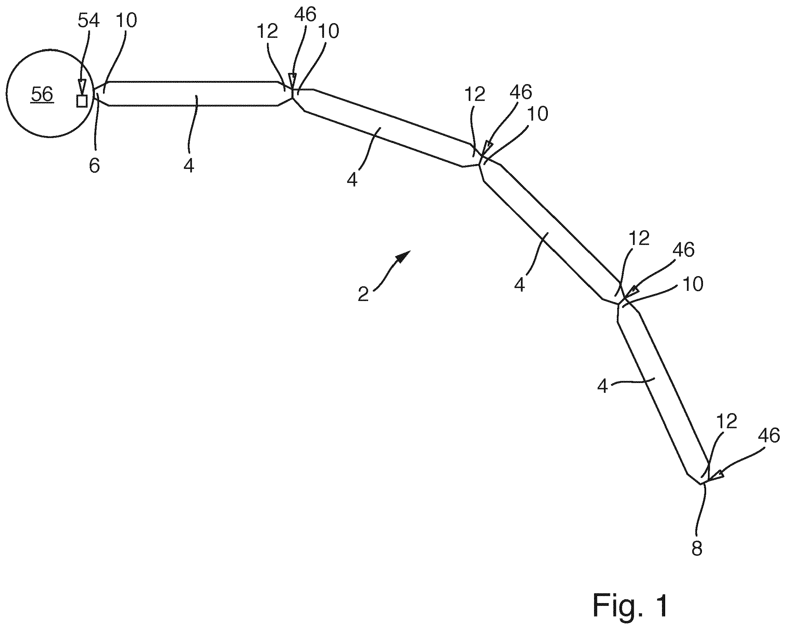

Wie aus Fig. 1 zu erkennen ist, weist das bevorzugte Ausführungsbeispiel eines erfindungsgemäßen Schwimmschlauchsystems 2 eine Vielzahl von Schwimmschlauchsegmenten 4 auf, die so in Reihe miteinander verbunden sind, dass eine Kette aus Schwimmschlauchsegmenten 4 gebildet wird, die sich zwischen einem ersten Kettenende 6 und einem zweiten Kettenende 8 erstreckt. Dabei weisen die einzelnen Schwimmschlauchsegmente 4 jeweils ein erstes Ende 10 und ein zweites Ende 12 auf, und jeweils ein erstes Ende 10 eines Schwimmschlauchsegments 4 ist mit einem zweiten Ende 12 eines weiteren Schwimmschlauchsegments 4 lösbar verbunden.

Die einzelnen Schwimmschlauchsegmente 4 sind so ausgebildet, dass sie an der Wasseroberfläche eines Gewässers wie beispielsweise der Meeresoberfläche schwimmen, wobei diese Schwimmfähigkeit auf unterschiedliche Weise erreicht werden kann. Das Material der Schwimmschlauchsegmente 4 kann so gewählt werden, dass das spezifische Gewicht des Schwimmschlauchsegments als Ganzem unter dem des Wassers liegt, sodass ein ausreichender Auftrieb wirkt. Es ist aber auch möglich, dass in den Schwimmschlauchsegmenten 4 Luftkammern ausgebildet sind, die ebenfalls für Auftrieb sorgen. Die das Schwimmschlauchsystem 2 bildenden Schwimmschlauchsegmente 4 können somit auf unterschiedliche Weise so ausgebildet sein, dass sie aufschwimmen und nicht aufgrund ihres Eigengewichts ins Wasser absinken.

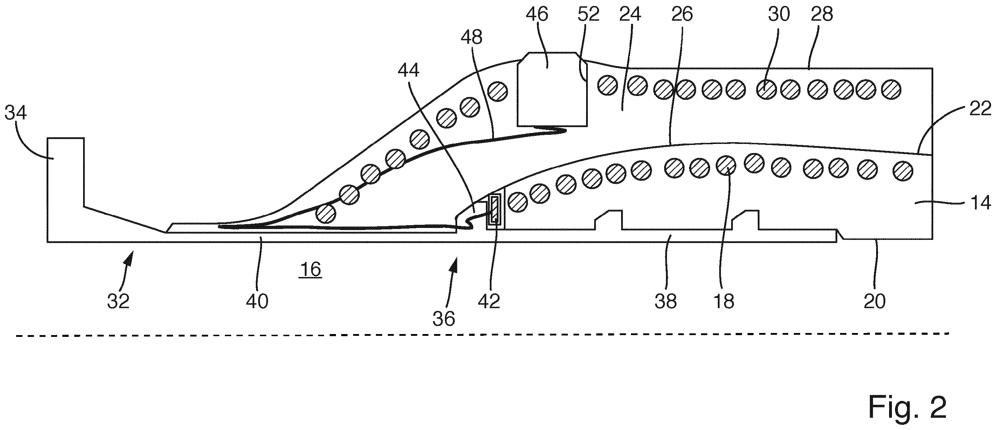

Der Aufbau der einzelnen Schwimmschlauchsegmente 4, die gemäß einem bevorzugten Ausführungsbeispiel der vorliegenden Erfindung ausgebildet sind, ist insbesondere der Fig. 2 zu entnehmen.

Die Schwimmschlauchsegmente 4 sind so aufgebaut, dass sie ein inneres Schlauchelement 14 aufweisen, das schlauchförmig ausgebildet ist, sodass es eine Wandung aufweist, die im Querschnitt insbesondere kreisringförmig sein kann und einen Innenraum umgibt, wobei der Innenraum des inneren Schlauchelements 14 den Leitungsbereich16 des Schwimmschlauchsegments 4 bildet, durch den ein Fluid wie beispielsweise Öl gefördert werden kann. Die Wandung des inneren Schlauchelements 14 ist mit einer inneren Karkasse 18 versehen, die ein hier schematisch dargestelltes Gewebe sowie Gummi aufweist und als ein Festigkeitsträger des inneren Schlauchelements 14 dient. Trotz der inneren Karkasse 18 kann das innere Schlauchelement 14 jedoch in der Weise elastisch sein, dass es unter Druck von innen oder außen seinen Querschnitt verkleinern oder vergrößern kann.

Das innere Schlauchelement 14 weist eine erste innere Oberfläche 20 auf, die in diesem Fall den Leitungsbereich 16 begrenzt, und eine erste äußere Oberfläche 22, die weg von dem Leitungsbereich 16 weist.

Außerdem weisen die Schwimmschlauchsegmente 4 ein äußeres Schlauchelement 24 auf, das ebenfalls schlauchförmig mit einer Wandung mit einem hier kreisringförmigen Querschnitt ausgebildet ist. Dabei weist das äußere Schlauchelement 24 eine zweite innere Oberfläche 26 auf, die einen Innenraum begrenzt. In diesem Innenraum ist das innere Schlauchelement 14 angeordnet und erstreckt sich parallel zu dem äußeren Schlauchelement 24 durch diesen hindurch. Insgesamt erstrecken sich das innere und das äußere Schlauchelement 14, 24 zwischen den ersten und zweiten Enden 10, 12 des Schwimmschlauchsegments 4.

In dem hier dargestellten bevorzugten Ausführungsbeispiel eines erfindungsgemäßen Schwimmschlauchsegments 4 liegt die zweite innere Oberfläche 26 im Normalfall, in dem sowohl das innere als auch das äußere Schlauchelement 14, 24 unbeschädigt sind, an der ersten äußeren Oberfläche 22 an, kann aber von dieser abgehoben oder gegenüber der ersten äußeren Oberfläche 22 verschoben werden. Es ist aber auch denkbar, dass auch im Normalfall bei unbeschädigten Schlauchelementen 14, 24 die erste äußere Oberfläche 22 des inneren Schlauchelements 14 von der zweiten inneren Oberfläche 26 des äußeren Schlauchelements 24 beabstandet ist, sodass zwischen dem inneren und äußeren Schlauchelementen 14, 24 ein Zwischenraum gebildet wird.

In jedem Fall kann sich aber in den Bereich zwischen den Schlauchelementen 14, 24 und damit zwischen der ersten äußeren Oberfläche 22 und der zweiten inneren Oberfläche 26 eindringende Flüssigkeit entlang diese Bereichs bis hin zu den Enden 10, 12 bewegen.

Das äußere Schlauchelement 24 weist ferner eine zweite äußere Oberfläche 28 auf, die nach außen weg von dem inneren Schlauchelement 14 weist, sodass sie in dem hier gezeigten bevorzugten Ausführungsbeispiel die Außenfläche des Schwimmschlauchsegments 4 bildet. Schließlich weist das äußere Schlauchelement 24 eine äußere Karkasse 30 auf, die ebenfalls ein hier schematisch dargestelltes Gewebe sowie Gummi aufweist und als Festigkeitsträger des äußeren Schlauchelements 24 dient. Dabei verhindert die äußere Karkasse 30 aber nicht zwingend, dass sich das äußere Schlauchelement 24 von dem inneren Schlauchelement 14 abhebt, wenn aufgrund einer Leckage in dem inneren oder dem äußeren Schlauchelement 14, 24 Flüssigkeit zwischen die Schlauchelemente 14, 24 gelangt.

Das Schwimmschlauchsegment 4 weist ferner ein erstes Anschlusselement 32 an dem ersten Ende 10 und ein zweites Anschlusselement (in Fig. 2 nicht dargestellt) an dem zweiten Ende 12 auf. Das zweite Anschlusselement ist bei dem hier beschriebenen Ausführungsbeispiel aber ganz ähnlich dem ersten Anschlusselement 32 aufgebaut, und das innere und das äußere Schlauchelement 14, 24 sind in gleicher Weise daran befestigt wie am ersten Anschlusselement 32, sodass es nicht erforderlich ist, dieses im Detail darzustellen und zu beschreiben.

Jedes der Anschlusselemente 32 weist einen Kupplungsabschnitt 34 zur Verbindung mit einem weiteren Anschlusselement und einen Rohrabschnitt 36 auf, der sich weg von dem Kupplungsabschnitt 34 erstreckt. Der Kupplungsabschnitt 34 kann insbesondere als Flansch ausgebildet sein, dessen Ebene senkrecht zu der Erstreckungsrichtung des Rohrabschnitts 36 verläuft. Wie weiter aus Fig. 2 zu erkennen ist, ist das innere Schlauchelement 14 an einem ersten Abschnitt 38 des Rohrabschnitts 36 befestigt ist, während das äußere Schlauchelement 24 an einem zweiten Abschnitt 40 des Rohrabschnitts 36 befestigt ist. Dabei sind der erste Abschnitt 38 und der zweite Abschnitt 40 in Erstreckungsrichtung des Rohrabschnitts 36 hintereinander angeordnet und der zweite Abschnitt 40 liegt näher an dem Kupplungsabschnitt 34 als der erste Abschnitt 38.

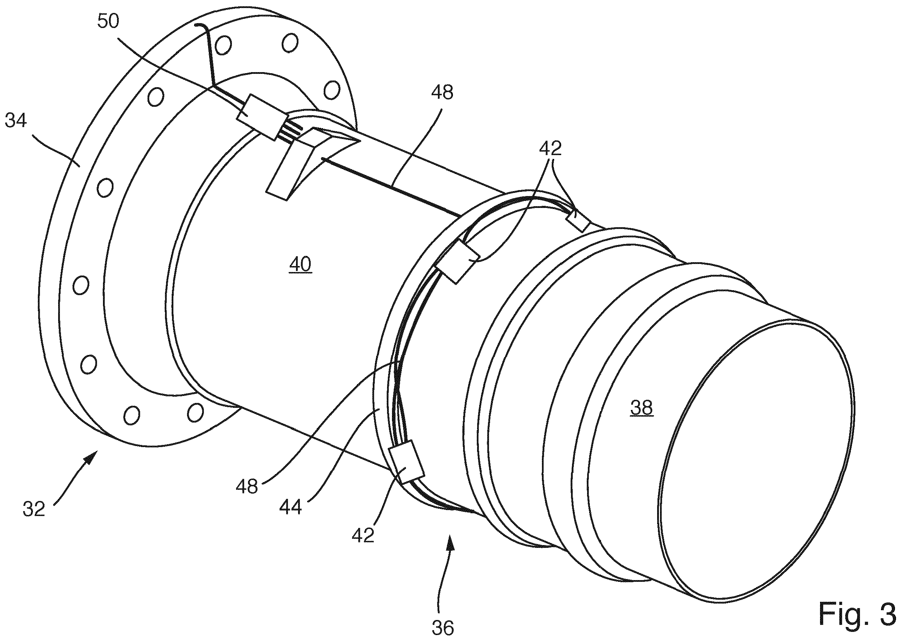

Wie den Fig. 2 und 3 weiter zu entnehmen ist, sind Sensoreinrichtungen 42 vorgesehen, die in dem hier beschriebenen bevorzugten Ausführungsbeispiel an dem Rohrabschnitt 36 des ersten Anschlusselements 32 zwischen dem ersten Abschnitt 38 und dem zweiten Abschnitt 40 angebracht sind. Dabei sind die Sensoreinrichtungen 42 um den Umfang des Rohrabschnitts 36 beabstandet. Damit sind die Sensoreinrichtungen 42 so angeordnet und angepasst, dass sie in der Lage sind, das Vorhandensein von wenigstens einer Substanz in dem Bereich zwischen den Schlauchelementen 14, 24 und damit zwischen der ersten äußeren Oberfläche 22 und der zweiten inneren Oberfläche 26 zu detektieren. Dadurch, dass eine Vielzahl von Sensoreinrichtungen 42 vorgesehen ist, wird sichergestellt, dass das Vorhandensein der fraglichen Substanz zuverlässig detektiert wird.

In dem hier beschriebenen Ausführungsbeispiel sind die Sensoreinrichtungen 42 angepasst, das Vorhandensein von Salzwasser und von Kohlenwasserstoffen als die fragliche Substanz zu detektieren. Durch die Sensitivität auf Kohlenwasserstoffe wird sichergestellt, dass durch eine Leckage in dem inneren Schlauchelement 14 in den Bereich zwischen den Schlauchelementen 14, 24 eindringendes Öl detektiert wird, während durch die Sensitivität auf Salzwasser eine Leckage im äußeren Schlauchelement 24 erfasst werden kann.

Wie weiter in Fig. 2 und 3 zu erkennen ist, weist der Rohrabschnitt 36 eine radial vorstehende umlaufende Rippe 44 aufweist, die in Erstreckungsrichtung des Rohrabschnitts 36 zwischen dem ersten Abschnitt 38 und dem zweiten Abschnitt 40 angeordnet ist, wobei die Sensoreinrichtungen 42 auf der Seite der Rippe 44 angeordnet sind, die zu dem ersten Abschnitt 38 weist. Durch die Rippe 44 wird eine einfache Montage und Positionierung der Sensoreinrichtungen 42 ermöglicht, bevor die Schlauchelemente 14, 24 an dem Rohrabschnitt 36 angebracht werden.

Aus Fig. 2 ist außerdem zu erkennen, dass eine Kommunikationseinrichtung 46 vorgesehen ist, die hier über Kabel 48 mit den Sensoreinrichtungen 42 verbunden ist, wobei es aber auch denkbar ist, dass die Sensoreinrichtungen 42 und die Kommunikationseinrichtung 46 drahtlos miteinander verbunden sind. In der Kabelverbindung zwischen den Sensoreinrichtungen 42 und der Kommunikationseinrichtung 46 kann auch, wie in Fig. 3 gezeigt, ein Verbinder 50 zwischengeschaltet sein. In dem in Fig.2 gezeigten Ausführungsbeispiel ist die Kommunikationseinrichtung 46 in einer Vertiefung 52 in dem äußeren Schlauchelement 24 aufgenommen, wobei die Vertiefung 52 sich von der zweiten äußeren Oberfläche 28 in das äußere Schlauchelement 24 hinein erstreckt. Damit ist die Kommunikationseinrichtung 46 von außen gut zugänglich. Die Kabel 48 zur Verbindung zwischen den Sensoreinrichtungen 42 und der Kommunikationseinrichtung verlaufen zum einen zwischen dem äußeren Schlauchelement 24 und dem zweiten Abschnitt 40 des Rohrabschnitts 36 und zum anderen durch das äußere Schlauchelement 24 hindurch in die Vertiefung 52 hinein. Es ist aber auch denkbar, dass die Kabel 48 direkt durch das äußeren Schlauchelement 24 hindurch in die Vertiefung 52 hinein verlaufen. Außerdem kann, wie in Fig. 3 durch den Verlauf des Kabels angedeutet, die Kommunikationseinrichtung auch außerhalb der Schlauchelemente angebracht sein.

Die Sensoreinrichtungen 42 sind mit der Kommunikationseinrichtung 46 verbunden, sodass Information, die das Vorhandensein der fraglichen Substanz, hier also Salzwasser und/oder Kohlenwasserstoffe, zwischen der ersten äußeren Oberfläche 22 und der zweiten inneren Oberfläche 26 betrifft, zu der Kommunikationseinrichtung 46 übertragen werden kann. Ferner ist die Kommunikationseinrichtung 46 angepasst, diese Information zu einer zentralen Kontrolleinrichtung 54 zu übertragen. In dem in Fig. 1 dargestellten Ausführungsbeispiel eines erfindungsgemäßen Schwimmschlauchsystems 2 ist die zentrale Kontrolleinrichtung 54 an einer Boje 56 angebracht, an der das erste Kettenende 6 angeschlossen ist, angebracht. Es ist aber auch denkbar, dass die zentrale Kontrolleinrichtung an einem der Schwimmschlauchsegmente 4 angebracht ist.

Die Übertragung der Information kann dabei von den Kommunikationseinrichtungen 46 der Schwimmschlauchsegmente 4 jeweils direkt drahtlos zu der zentralen Kontrolleinrichtung 54 erfolgen. Es ist aber auch möglich, dass die Information unter Zwischenschaltung einer oder mehrere weiterer Kommunikationseinrichtungen 46 zu der zentralen Kontrolleinrichtung 54 übertragen wird. Schließlich ist es auch möglich, dass die Kontrolleinrichtung 54 und die Kommunikationseinrichtungen 46 über Kabel verbunden sind.

Das zuvor beschriebene Ausführungsbeispiel eines erfindungsgemäßen Schwimmschlauchsystems 2 arbeitet wie folgt.

Wenn eine Leckage in dem inneren Schlauchelement 14 auftritt, sodass beispielsweise Öl aus dem Leitungsbereich 16 in den Bereich zwischen der ersten äußeren Oberfläche 22 und der zweiten inneren Oberfläche 26 gelangt, wird dieses Öl mittels der Sensoreinrichtungen 42, die in Kontakt mit diesem Bereich stehen und für Kohlenwasserstoffe sensitiv sind, detektiert. Dadurch wird ein Signal erzeugt, das von der Sensoreinrichtung 42 zu der Kommunikationseinrichtung 46 übertragen und von dieser weiter zu der zentralen Kontrolleinrichtung 54 versandt wird. Letzteres kann entweder direkt oder indirekt unter Zwischenschaltung weiterer Kommunikationseinrichtungen 46 erfolgen.

Dadurch kann bereits dann eine Fehlermeldung in Form des Sensorsignals über das Eindringen von Öl in den Bereich zwischen den Schlauchelementen 14, 24 an die zentrale Kontrolleinrichtung übermittelt werden, wenn noch gar kein Öl aus dem Leitungsbereich 16 in die Umgebung gelangt ist. Somit ist es möglich, bereits frühzeitig Maßnahmen zu treffen, die ein solches Austreten verhindern, beispielsweise das Austauschen des defekten Schwimmschlauchsegments 4 in dem Schwimmschlauchsystem.

Ganz analog wird vorgegangen, wenn in dem äußeren Schlauchelement 24 eine Leckage aufgetreten ist, sodass Salzwasser in den Bereich zwischen den Schlauchelementen 14, 24 eindringt. Auch dies kann mit Hilfe der Sensoreinrichtung 42 frühzeitig detektiert werden, insbesondere bevor aufgrund der Leckage im äußeren Schlauchelement 24 auch das innere Schlauchelement 14 Schaden nimmt und möglicherweise auch undicht wird.

Insgesamt ermöglicht das erfindungsgemäße Schwimmschlauchsystem 2 mit den ebenfalls erfindungsgemäßen Schwimmschlauchsegmenten 4, dass bereits frühzeitig Leckagen erkannt und vor dem Eintreten des eigentlichen Schadens Gegenmaßnahmen getroffen werden können.

### Bezugszeichenliste

- 2: Schwimmschlauchsystem
- 4: Schwimmschlauchsegment
- 6: erstes Kettenende
- 8: zweites Kettenende
- 10: erstes Ende
- 12: zweites Ende
- 14: inneres Schlauchelement
- 16: Leitungsbereich
- 18: innere Karkasse
- 20: erste innere Oberfläche
- 22: erste äußere Oberfläche
- 24: äußeres Schlauchelement
- 26: zweite innere Oberfläche
- 28: zweite äußere Oberfläche
- 30: äußere Karkasse
- 32: erstes Anschlusselement
- 34: Kupplungsabschnitt
- 36: Rohrabschnitt
- 38: erster Abschnitt
- 40: zweiter Abschnitt
- 42: Sensoreinrichtung
- 44: Rippe
- 46: Kommunikationseinrichtung
- 48: Kabel
- 50: Verbinder
- 52: Vertiefung
- 54: Zentrale Kontrolleinrichtung
- 56: Boje

## Patentansprüche

1. Schwimmschlauchsegment (4) mit
einem inneren Schlauchelement (14), das schlauchförmig ist und eine erste innere Oberfläche (20), die einen Leitungsbereich (16) begrenzt, durch den ein Fluid wie beispielsweise Öl gefördert werden kann, und eine erste äußere Oberfläche (22) aufweist, die weg von dem Leitungsbereich (16) weist,
einem äußeren Schlauchelement (24), das schlauchförmig ist sowie eine zweite innere Oberfläche (26), die einen Innenraum begrenzt, durch den sich das innere Schlauchelement (14) erstreckt, und eine zweite äußere Oberfläche (28) aufweist, die nach außen weg von dem inneren Schlauchelement (14) weist, und
wenigstens einer Kommunikationseinrichtung (46), die angepasst ist, direkt oder indirekt Information zu einer zentralen Kontrolleinrichtung (54) zu übertragen,
wobei das innere und das äußere Schlauchelement (14, 24) sich zwischen einem ersten Ende (10) und einem zweiten Ende (12) des Schwimmschlauchsegments (4) erstrecken,
wobei wenigstens eine Sensoreinrichtung (42) vorgesehen ist, wobei die wenigstens eine Sensoreinrichtung (42) so angeordnet und angepasst ist, dass sie in der Lage ist, das Vorhandensein von wenigstens einer Substanz in dem Bereich zwischen der ersten äußeren Oberfläche (22) und der zweiten inneren Oberfläche (26) zu detektieren,
wobei die wenigstens eine Sensoreinrichtung (42) mit der Kommunikationseinrichtung (46) verbunden ist, sodass Information, die das Vorhandensein der wenigstens einen Substanz zwischen der ersten äußeren Oberfläche (22) und der zweiten inneren Oberfläche (26) betrifft, zu der Kommunikationseinrichtung (46) übertragen werden kann, und
wobei die Kommunikationseinrichtung (46) angepasst ist, die Information betreffend das Vorhandensein der wenigstens einen Substanz zwischen der ersten äußeren Oberfläche (22) und der zweiten inneren Oberfläche (26) zu der zentralen Kontrolleinrichtung (54) zu übertragen,
**dadurch gekennzeichnet, dass**
die Kommunikationseinrichtung (46) in einer Vertiefung (52) in dem äußeren Schlauchelement (24) aufgenommen ist und
wobei die Vertiefung (52) sich von der zweiten äußeren Oberfläche (28) in das äußere Schlauchelement (24) hinein erstreckt.

2. Schwimmschlauchsegment nach Anspruch 1, wobei die wenigstens eine Sensoreinrichtung (42) angepasst ist, das Vorhandensein von Salzwasser als die wenigstens eine Substanz zu detektieren.

3. Schwimmschlauchsegment nach einem oder mehreren der Ansprüchen 1 oder 2, wobei die wenigstens eine Sensoreinrichtung (42) angepasst ist, das Vorhandensein von Kohlenwasserstoffen als die wenigstens eine Substanz zu detektieren.

4. Schwimmschlauchsegment nach einem oder mehreren der Ansprüche 1 bis 3, wobei das Schwimmschlauchsegment (4) ferner ein erstes Anschlusselement (32) an dem ersten Ende (10) und ein zweites Anschlusselement an dem zweiten Ende (12) aufweist,
wobei jedes Anschlusselement (32) einen Kupplungsabschnitt (34) zur Verbindung mit einem weiteren Anschlusselement (32) und einen Rohrabschnitt (36) aufweist, der sich weg von dem Kupplungsabschnitt (34) erstreckt,
wobei an jedem Anschlusselement (32) das innere Schlauchelement (14) an einem ersten Abschnitt (38) des Rohrabschnitts (36) befestigt ist und das äußere Schlauchelement (24) an einem zweiten Abschnitt (40) des Rohrabschnitts (36) befestigt ist, wobei der zweite Abschnitt (40) näher an dem Kupplungsabschnitt (34) ist als der erste Abschnitt (38).

5. Schwimmschlauchabschnitt nach Anspruch 4, wobei die wenigstens eine Sensoreinrichtung (42) an dem Rohrabschnitt (36) des ersten Anschlusselements (32) zwischen dem ersten Abschnitt (38) und dem zweiten Abschnitt (40) angebracht ist.

6. Schwimmschlauchsegment nach Anspruch 5, wobei eine Vielzahl von Sensoreinrichtungen (42) an dem Rohrabschnitt (36) des ersten Anschlusselements (32) zwischen dem ersten Abschnitt (38) und dem zweiten Abschnitt (40) angebracht sind, wobei die Sensoreinrichtungen (42) um den Umfang des Rohrabschnitts (36) beabstandet sind.

7. Schwimmschlauchsegment nach einem oder mehreren der Ansprüche 4 bis 6, wobei der Rohrabschnitt (36) eine radial vorstehende umlaufende Rippe (44) aufweist, die zwischen dem ersten Abschnitt (38) und dem zweiten Abschnitt (40) angeordnet ist, und
wobei wenigstens eine der Sensoreinrichtungen (42) auf der Seite der Rippe (44) angeordnet ist, die zu dem ersten Abschnitt (38) weist.

8. Schwimmschlauchsegment nach einem oder mehreren der Ansprüche 4 bis 7, wobei die wenigstens eine Sensoreinrichtung (42) mit der Kommunikationseinrichtung (46) mittels eines Kabels (48) verbunden ist, das zwischen dem äußeren Schlauchelement (24) und dem zweiten Abschnitt (40) des Rohrabschnitts (36) verläuft.

9. Schwimmschlauchsegment nach einem oder mehreren der Ansprüche 4 bis 8, wobei die wenigstens eine Sensoreinrichtung (42) mit der Kommunikationseinrichtung (46) über ein Kabel (48) verbunden ist, das sich durch das äußere Schlauchelement (24) erstreckt.

10. Schwimmschlauchsegment nach einem oder mehreren der Ansprüche 1 bis 9, wobei sich das Kabel (48) durch das äußere Schlauchelement (24) in die Vertiefung (52) hinein erstreckt.

11. Schwimmschlauchsegment nach einem oder mehreren der Ansprüche 1 bis 10, wobei die Kommunikationseinrichtung (46) ausgebildet ist für eine drahtlose Kommunikation, um drahtlos die Information betreffend das Vorhandensein der wenigstens Substanz zwischen der ersten äußeren Oberfläche (22) und der zweiten inneren Oberfläche (26) an eine weitere Kommunikationseinrichtung (46) oder die zentrale Kontrolleinrichtung (54) zu übertragen.

12. Schwimmschlauchsegment nach einem oder mehreren der Ansprüche 1 bis 11, wobei das innere Schlauchelement (14) eine innere Karkasse (18) und/oder das äußere Schlauchelement (24) eine äußere Karkasse (30) aufweisen.

13. Schwimmschlauchsystem umfassend eine Vielzahl von Schwimmschlauchsegmenten nach einem oder mehreren der Ansprüche 1 bis 12,
wobei die ersten und zweiten Enden (10, 12) unterschiedlicher Schwimmschlauchsegmente (4) derart miteinander verbunden sind, dass sie eine Kette von Schwimmschlauchsegmenten (4) bilden, die sich zwischen einem ersten Kettenende (6) und einem zweiten Kettenende (8) erstreckt.

14. Schwimmschlauchsystem nach Anspruch 13, wobei das System ferner eine Boje (56) aufweist, wobei die Boje (56) die zentrale Kontrolleinrichtung (54) aufweist.

## Claims

1. Floating hose segment (4) with
an inner hose element (14) which has the shape of a hose and has a first inner surface (20), which delimits a line region (16) through which a fluid such as, for example, oil can be conveyed, and a first outer surface (22), which faces away from the line region (16),
an outer hose element (24) which has the shape of a hose and has a second inner surface (26), which delimits an interior space through which the inner hose element (14) extends, and a second outer surface (28), which faces outwards away from the inner hose element (14), and
at least one communication device (46) which is adapted to transmit information directly or indirectly to a central control device (54),
wherein the inner and outer hose elements (14, 24) extend between a first end (10) and a second end (12) of the floating hose segment (4),
wherein at least one sensor device (42) is provided, wherein the at least one sensor device (42) is arranged and adapted so as to be capable of detecting the presence of at least one substance in the region between the first outer surface (22) and the second inner surface (26),
wherein the at least one sensor device (42) is linked to the communication device (46) such that information relating to the presence of the at least one substance between the first outer surface (22) and the second inner surface (26) can be transmitted to the communication device (46), and
wherein the communication device (46) is adapted to transmit the information relating to the presence of the at least one substance between the first outer surface (22) and the second inner surface (26) to the central control device (54),
**characterized in that**
the communication device (46) is accommodated in a recess (52) in the outer hose element (24), and
wherein the recess (52) extends from the second outer surface (28) into the outer hose element (24).

2. Floating hose segment according to Claim 1, wherein the at least one sensor device (42) is adapted to detect the presence of salt water as the at least one substance.

3. Floating hose segment according to one or more of Claims 1 and 2, wherein the at least one sensor device (42) is adapted to detect the presence of hydrocarbons as the at least one substance.

4. Floating hose segment according to one or more of Claims 1 to 3, wherein the floating hose segment (4) moreover has a first connection element (32) at the first end (10) and a second connection element at the second end (12),
wherein each connection element (32) has a coupling section (34), for joining to a further connection element (32), and a pipe section (36), which extends away from the coupling section (34),
wherein at each connection element (32), the inner hose element (14) is fastened to a first section (38) of the pipe section (36) and the outer hose element (24) is fastened to a second section (40) of the pipe section (36), wherein the second section (40) is closer to the coupling section (34) than the first section (38).

5. Floating hose segment according to Claim 4, wherein the at least one sensor device (42) is attached to the pipe section (36) of the first connection element (32) between the first section (38) and the second section (40).

6. Floating hose segment according to Claim 5, wherein a multiplicity of sensor devices (42) is attached to the pipe section (36) of the first connection element (32) between the first section (38) and the second section (40), wherein the sensor devices (42) are spaced apart around the circumference of the pipe section (36).

7. Floating hose segment according to one or more of Claims 4 to 6, wherein the pipe section (36) has a radially projecting circumferential rib (44) which is arranged between the first section (38) and the second section (40), and
wherein at least one of the sensor devices (42) is arranged on that side of the rib (44) which faces the first section (38).

8. Floating hose segment according to one or more of Claims 4 to 7, wherein the at least one sensor device (42) is linked to the communication device (46) by means of a cable (48) which runs between the outer hose element (24) and the second section (40) of the pipe section (36).

9. Floating hose segment according to one or more of Claims 4 to 8, wherein the at least one sensor device (42) is linked to the communication device (46) via a cable (48) which extends through the outer hose element (24).

10. Floating hose segment according to one or more of Claims 1 to 9, wherein the cable (48) extends through the outer hose element (24) into the recess (52).

11. Floating hose segment according to one or more of Claims 1 to 10, wherein the communication device (46) is designed for wireless communication in order to transmit information relating to the presence of the at least one substance between the first outer surface (22) and the second inner surface (26) wirelessly to a further communication device (46) or to the central control device (54).

12. Floating hose segment according to one or more of Claims 1 to 11, wherein the inner hose element (14) has an inner carcass (18) and/or the outer hose element (24) has an outer carcass (30).

13. Floating hose system comprising a multiplicity of floating hose segments according to one or more of Claims 1 to 12,
wherein the first and second ends (10, 12) of different floating hose segments (4) are joined to each other in such a way that they form a chain of floating hose segments (4) which extends between a first chain end (6) and a second chain end (8).

14. Floating hose system according to Claim 13, wherein the system moreover has a buoy (56), wherein the buoy (56) has the central control device (54).

## Revendications

1. Segment (4) de tuyau flottant avec
un élément de tuyau intérieur (14) qui est tubulaire et qui comporte une première surface intérieure (20), qui délimite une zone de ligne (16) à travers laquelle un fluide comme de l'huile peut être transporté, et une première surface extérieure (22), qui est dirigée à l'opposé de la zone de ligne (16),
un élément de tuyau extérieur (24), qui est tubulaire et qui comporte une seconde surface intérieure (26), qui délimite un espace intérieur à travers lequel l'élément de tuyau intérieur (14) s'étend et une seconde surface extérieure (28), qui est dirigée vers l'extérieur à l'opposé de l'élément de tuyau intérieur (14), et
au moins un dispositif de communication (46) qui est adapté pour transmettre directement ou indirectement des informations à un dispositif de commande central (54),
l'élément de tuyau intérieur et l'élément de tuyau extérieur (14, 24) s'étendant entre une première extrémité (10) et une seconde extrémité (12) du segment (4) de tuyau flottant,
au moins un dispositif de détection (42) étant prévu, l'au moins un dispositif de détection (42) étant disposé et adapté de telle sorte qu'il est en mesure de détecter la présence d'au moins une substance dans la zone entre la première surface extérieure (22) et la seconde surface intérieure (26),
l'au moins un dispositif de détection (42) étant relié au dispositif de communication (46) si bien que des informations concernant la présence de l'au moins une substance entre la première surface extérieure (22) et la seconde surface intérieure (26) peuvent être transmises au dispositif de communication (46), et
le dispositif de communication (46) étant adapté pour transmettre les informations concernant la présence de l'au moins une substance entre la première surface extérieure (22) et la seconde surface intérieure (26) au dispositif de commande central (54),
**caractérisé en ce que**
le dispositif de communication (46) est reçu dans l'élément de tuyau extérieur (24) dans un renfoncement (52), et
le renfoncement (52) s'étendant depuis la seconde surface extérieure (28) dans l'élément de tuyau extérieur (24).

2. Segment de tuyau flottant selon la revendication 1, l'au moins un dispositif de détection (42) étant adapté pour détecter la présence d'eau salée en tant que l'au moins une substance.

3. Segment de tuyau flottant selon l'une ou plusieurs des revendications 1 ou 2, l'au moins un dispositif de détection (42) étant adapté pour détecter la présence d'hydrocarbures en tant que l'au moins une substance.

4. Segment de tuyau flottant selon l'une ou plusieurs des revendications 1 à 3, le segment (4) de tuyau flottant comportant en outre un premier élément de raccordement (32) sur la première extrémité (10) et un second élément de raccordement sur la seconde extrémité (12),
chaque élément de raccordement (32) comportant une section de couplage (34) destinée à être reliée à un autre élément de raccordement (32) et une section tubulaire (36) qui s'étend à l'opposé de la section de couplage (34),
l'élément de tuyau intérieur (14) étant fixé sur une première section (38) de la section tubulaire (36) et l'élément de tuyau extérieur (24) étant fixé sur une deuxième section (40) de la section tubulaire (36) sur chaque élément de raccordement (32), la deuxième section (40) étant plus proche de la section de couplage (34) que la première section (38).

5. Segment de tuyau flottant selon la revendication 4, l'au moins un dispositif de détection (42) étant installé entre la première section (38) et la deuxième section (40) sur la section tubulaire (36) du premier élément de raccordement (32).

6. Segment de tuyau flottant selon la revendication 5, une pluralité de dispositifs de détection (42) étant installés entre la première section (38) et la deuxième section (40) sur la section tubulaire (36) du premier élément de raccordement (32), les dispositifs de détection (42) étant tenus à distance autour de la périphérie de la section tubulaire (36).

7. Segment de tuyau flottant selon l'une ou plusieurs des revendications 4 à 6, la section tubulaire (36) comportant une nervure (44) périphérique faisant saillie radialement, qui est disposée entre la première section (38) et la deuxième section (40), et
au moins un des dispositifs de détection (42) étant disposé sur le côté de la nervure (44) qui est dirigé vers la première section (38).

8. Segment de tuyau flottant selon l'une ou plusieurs des revendications 4 à 7, l'au moins un dispositif de détection (42) étant relié au dispositif de communication (46) au moyen d'un câble (48) qui s'étend entre l'élément de tuyau extérieur (24) et la deuxième section (40) de la section tubulaire (36).

9. Segment de tuyau flottant selon l'une ou plusieurs des revendications 4 à 8, l'au moins un dispositif de détection (42) étant relié au dispositif de communication (46) par un câble (48) qui s'étend à travers l'élément de tuyau extérieur (24).

10. Segment de tuyau flottant selon l'une ou plusieurs des revendications 1 à 9, le câble (48) s'étendant dans le renfoncement (52) à travers l'élément de tuyau extérieur (24).

11. Segment de tuyau flottant selon l'une ou plusieurs des revendications 1 à 10, le dispositif de communication (46) étant réalisé pour une communication sans fil pour transmettre sans fil les informations concernant la présence de l'au moins une substance entre la première surface extérieure (22) et la deuxième surface intérieure (26) à un autre dispositif de communication (46) ou au dispositif de commande central (54).

12. Segment de tuyau flottant selon l'une ou plusieurs des revendications 1 à 11, l'élément de tuyau intérieur (14) comportant une carcasse intérieure (18) et/ou l'élément de tuyau extérieur (24) comportant une carcasse extérieure (30).

13. Système de tuyau flottant comprenant une pluralité de segments de tuyau flottant selon l'une ou plusieurs des revendications 1 à 12,
les première et seconde extrémités (10, 12) de différents segments (4) de tuyau flottant étant reliées entre elles de telle manière qu'elles forment une chaîne de segments (4) de tuyau flottant, qui s'étend entre une première extrémité de chaîne (6) et une seconde extrémité de chaîne (8).

14. Système de tuyau flottant selon la revendication 13, le système comportant en outre une balise (56), la balise (56) comportant le dispositif de commande central (54).
